# EUROPEAN PATENT APPLICATION

(11) **EP 4 541 710 A1**
(43) Date of publication of application: **23.04.2025**
(21) Application number: 24200544.5
(22) Date of filing: 16.09.2024
(51) Int. Cl.: B64C 3/18, B64F 5/10, B64D 37/00

(54) **IMPROVEMENTS RELATING TO FUEL STRINGER DUCT BULKHEADS**

(30) Priority: 19.10.2023 GB 202315977
(71) Applicant: Airbus Operations Limited, Bristol BS34 7PA (GB)
(72) Inventor: DEACON, Jonathan, BS34 7PA Bristol (GB); PEACHEY, Daniel, BS34 7PA Bristol (GB); RUIZ DE PABLO, Javier, BS34 7PA Bristol (GB); COOPER, William, BS34 7PA Bristol (GB)
(74) Representative: Lerwill, Jonathan Ashley Ronald

(57) **Abstract**

An assembly comprising a fuel stringer duct (5), a bulkhead (200), and a bulkhead retainer (150) is disclosed. The bulkhead (200) is positioned in the fuel stringer duct (5) to block the flow of fluid along the fuel stringer duct (5). The bulkhead retainer (200) comprises a retainer portion (152) that extends through an opening (52) in a wall of the fuel stringer duct (5) and which is configured to abut with the bulkhead (200) to prevent movement of the bulkhead (200) along the fuel stringer duct (5). A method of installing a bulkhead (200) in a fuel stringer duct (5) is also disclosed.

## Description

### BACKGROUND OF THE INVENTION

The present disclosure relates to fuel stringer duct bulkheads. In particular, the present disclosure relates to an assembly comprising a fuel stringer duct, a bulkhead, and a bulkhead retainer configured to prevent movement of the bulkhead along the fuel stringer duct in use. The present disclosure also relates to a connector for connecting a fluid flow duct to a fuel stringer duct, wherein the connector comprises an integrated bulkhead retainer, a bulkhead suitable for use with a bulkhead retainer, and a method of installing a bulkhead retainer.

It is known to use aircraft hat section wing stringers as ducts to conduct fluids as both liquids and gasses in a spanwise direction of the wing. Stringers are stiffening members that are fixed to the wing skin and which run in a spanwise direction of the wing, from wing root to wing tip. The cross-sectional shape of a hat stringer is defined by two spaced-apart co-planar flanges for attachment of the stringer to a panel being stiffened, a pair of spaced-apart upstanding webs attached to inner edges of the flanges and a crown bridging across distal ends of the webs. Such a stringer, when attached to a panel being stiffened, forms a closed channel which is capable of conducting fluids along its length.

In particular, with modern civil airliners using the space within the wing for fuel tanks, such hat section stringers may be used to conduct fuel, fuel vapour or air between fuel tanks along the span of the wing. Such stringers have become known as fuel stringer ducts (FSDs) and in particular are used to vent air from a centre fuel tank and one or more wing tanks to a surge tank usually located in an outboard section of the wing. Air enters the FSD in a given tank via a bell mouth or a float valve located inside and near to the top of the tank. The bell mouth or float valve is usually connected to the FSD by a length of pipe.

Where only part of an FSD is used to transport fluid along the spanwise direction of the wing, the FSD may be internally partitioned into fluid-carrying portions and non-fluid-carrying portions. An FSD can be internally partitioned by means of a bulkhead of the type described in WO 2021/122542 Al, which is adapted to block the flow of fluid along the duct. The disclosed bulkhead has a bulkhead body and a gasket which, in use, seals a gap between the bulkhead body and the internal walls of an FSD. There may be a pressure difference across the bulkhead within the FSD in use so it is important to ensure that is not caused to move by the forces on the bulkhead due to the pressure difference.

The present invention seeks to mitigate one or more of the above-mentioned problems. Alternatively or additionally, the present invention seeks to provide an improved assembly comprising an FSD, a bulkhead, and a bulkhead retainer, an improved connector for connecting an FSD to another fluid flow duct, an improved bulkhead for an FSD, and methods relating thereto.

### SUMMARY OF THE INVENTION

The present invention provides, according to a first aspect, an assembly comprising a fuel stringer duct (FSD), a bulkhead, and a bulkhead retainer. The bulkhead is positioned in the internal channel of the FSD to block the flow of fluid along the internal channel of the FSD, the bulkhead comprising a gasket sealing a gap between a body of the bulkhead and the internal surfaces of the walls defining the channel of the FSD. The FSD comprises a wall formed with a first opening. The bulkhead retainer comprises a cover portion and a retainer portion. The cover portion is fastened to an outer surface of the wall of the FSD such that the cover portion covers the first opening in the wall. The retainer portion extends from the cover portion, through the first opening in the wall, and into the internal channel of the FSD. The retainer portion is configured to abut with the body of the bulkhead to prevent movement of the bulkhead along the internal channel of the FSD beyond the retainer portion.

The internal channel of the FSD may define a longitudinal axis that extends along the channel. The retainer portion may be spaced apart from the body of the bulkhead such that the bulkhead may be able to move before abutting with the retainer portion. As such, the retainer portion may not be in contact with the bulkhead but may make contact and abut with the bulkhead if the bulkhead is moved along the internal channel of the FSD. For example, the bulkhead may be able to move along the internal channel by between approximately 0.25 millimetres and 5 millimetres before abutting with the retainer portion.

The internal channel of the FSD may comprise a portion configured to be a fluid-carrying portion on a first side of the bulkhead. The internal channel of the FSD may comprise a portion configured to be a non-fluid-carrying portion on a second, opposite side of the bulkhead. In some embodiments of the invention there may be fluid-carrying portions on both sides of the bulkhead.

It is important that the bulkhead is properly aligned during installation of the bulkhead within the FSD in order to ensure adequate sealing by the bulkhead. Additionally, it is important that the bulkhead is fixed within the FSD so that it is not caused to move by any pressure difference in use across the bulkhead. The assembly according to the invention comprises a bulkhead retainer configured to prevent substantial movement of the bulkhead along the FSD in use, but which is independent of the bulkhead to so that the bulkhead can naturally self-align without being substantially influenced by the bulkhead retainer. As such, the bulkhead may be less susceptible to becoming misaligned and the seal being broken.

The body of the bulkhead may be formed with a pocket and the retainer portion of the bulkhead retainer may be received in the pocket. The retainer portion of the bulkhead retainer may be configured to abut with one or more internal walls of the pocket to prevent movement of the bulkhead. Internal walls of the pocket may be positioned on opposing sides of the retainer portion along the longitudinal axis of the channel. The retainer portion may be dimensioned such that, when the retainer portion is located centrally in the pocket, there may be a first clearance on either of the second plate portion, along the longitudinal axis the channel between the retainer portion and the internal walls of the pocket. The first clearance may be between approximately 0.25 millimetres and 5 millimetres. The first clearance may be 0.5 millimetres, for example. The retainer portion may be dimensioned such that, when the retainer portion is located centrally in the pocket, there will be a second clearance between the retainer portion and the internal walls of the pocket on each lateral side of the retainer portion, perpendicular to the longitudinal axis of the channel. The second clearance may be between 2 millimetres and 6 millimetres. The second clearance may be 4 millimetres, for example. There may be a third clearance between the lower edge of the retainer portion and an internal wall of the pocket below or adjacent to the lower edge of the retainer portion. The third clearance may be approximately equal to the second clearance. The third clearance may be between 2 millimetres and 6 millimetres. The third clearance may be 4 millimetres, for example. The retainer portion may be a plate oriented in a plane that is perpendicular to an axis defined by the channel. The cover portion may be a plate. The retainer portion may extend perpendicularly from the cover portion.

The bulkhead retainer may comprise a stiffening member extending between the cover portion and the retainer portion. The stiffening member may be a web. The stiffening member may have a generally triangular shape. The stiffening member may be oriented in a plane that is perpendicular to planes defined by the cover portion and the retainer portion. The stiffening member may be configured to stiffen the bulkhead retainer to resist motion of the bulkhead in a direction towards a non-fluid-carrying portion of the FSD channel.

The internal dimensions of the pocket may be larger than the external dimensions of the retainer portion. There may therefore be a space between the retainer portion and one or more internal walls of the pocket. The bulkhead may be movable to a position along the internal channel of the FSD at which the retainer portion does not make contact with any of the internal walls of the pocket. This arrangement is advantageous because it reduces the chances of the retainer portion substantially moving the bulkhead during the process of installing the bulkhead retainer, thereby allowing the bulkhead to remain self-aligned within the channel. Substantially moving the bulkhead could result in the seal that the bulkhead makes with the internal walls of the channel being broken.

There may be a second opening through the thickness of the wall of the FSD and the second opening may be dimensioned such that the bulkhead can be passed through the second opening and into the internal channel of the FSD. The second opening may be dimensioned such that parts of the bulkhead when disassembled can be passed through the second opening so that the bulkhead can be assembled within the channel of the FSD. For example, the bulkhead may comprise a gasket positioned between first and second body portions and a fastener configured to pull the first and second body portions together to cause the gasket to deform outwardly. The second opening may be dimensioned such that the first and second body portions, gasket, and fastener can be passed into the channel so that the bulkhead can be assembled within the channel. The second opening may be spaced apart from the first opening along a length direction of the FSD. The gasket of the bulkhead may be at a position along the FSD between the first opening and the second opening.

The bulkhead retainer may form part of a connector for connecting a fluid flow duct to an FSD. The connector may comprise a first opening on a first face, a second opening on a second face, and an internal channel for fluid passage between the first opening and the second opening. The connector may be mounted to the outer surface of the wall of the FSD such that the first opening of the connector is in fluid communication with the second opening of the FSD. The connector may comprise a body. The first opening may be on a first face of the body. The second opening may be on a second face of the body. The second face may be configured for connection with a fluid flow duct.

The connector may be mounted to the FSD using one or more fasteners on a first side of the retainer portion and one or more fasteners on a second, opposite side of the retainer portion. The retainer portion may define the position of the bulkhead within the FSD. As such, positioning fasteners on opposing sides of the retainer portion amounts to positioning fasteners on opposing sides of the bulkhead. In this situation, at least some of the fasteners used to mount the connector to the FSD will be located within the non-fluid-carrying portion. Placing fasteners within the fluid-carrying portion of the FSD is undesirable because they increase drag within the duct.

According to a second aspect, the present invention provides a connector for connecting a fluid flow duct to an FSD. The connector comprises a body, the body comprises a first opening on a first face, a second opening on a second face, and an internal channel for fluid passage between the first opening and the second opening. The connector comprises a bulkhead retainer comprising a cover portion having a face that is co-planar with the first face of the body and a retainer portion that extends from the cover portion. The bulkhead retainer may have any of the features of the bulkhead retainer according to the first aspect of the invention.

The first face may be configured for positioning in abutment with a surface of the FSD. The second face may be configured for positioning in abutment with the fluid flow duct. The connector may be provided with holes for fastening the connector to the FSD. The holes may be provided through the body of the connector. The connector may therefore be configured to be releasably fastenable to the FSD.

According to a third aspect, the present invention provides a bulkhead for an FSD comprising a first body portion, a second body portion, and a gasket positioned between the first body portion, wherein the bulkhead is configured such that the first body portion and second body portion can be moved towards one another to compress the gasket and to thereby cause the gasket to move outwardly with respect to the first and second body portions; and one of the first and second body portions comprises a pocket for receiving a bulkhead retainer.

The bulkhead may comprise a fastener. The first body portion may be provided with a hole through which a fastener passes, the fastener being received in a corresponding threaded hole in the second body portion. The fastener may be operable to move the first body portion and second body towards one another to compress the gasket, and the second body portion comprises the pocket.

According to a fourth aspect, the present invention provides a method of installing a bulkhead in an FSD. The method comprises inserting a retainer portion of a tool through a first opening in a wall of an FSD and into a pocket formed in a bulkhead; securing the tool to the wall of the FSD such that the tool is held in a fixed position with respect to the FSD; adjusting a gasket of the bulkhead to seal a gap between a body of the bulkhead and the internal surfaces of the walls defining the internal channel of the FSD; removing the tool; and installing a bulkhead retainer by inserting a retainer portion of the bulkhead retainer into the pocket of the bulkhead and securing a cover portion of the bulkhead retainer to the wall of the FSD such that the cover portion covers the first opening in the wall.

The bulkhead should not substantially move during the step of inserting the retainer portion of the bulkhead retainer into the pocket. The tool may comprise a cover portion similar to the cover portion of the bulkhead retainer. The cover portion of the tool may be secured to the wall of the FSD. The tool may be secured to the wall by means of fasteners which pass through the tool and are fastened in holes formed in the wall of the FSD. The bulkhead retainer may be secured to the wall by means of fasteners which pass through the cover portion of the bulkhead retainer and are fastened in holes formed in the wall of the FSD. The tool and bulkhead retainer may be secured using the same holes in the wall of the FSD. The internal dimensions of the pocket may larger than the external dimensions of the retainer portion of the tool. The tool and the bulkhead retainer may be similarly dimensioned to ensure that the bulkhead does not substantially move during the step of inserting the retainer portion of the bulkhead retainer into the pocket. For example, in both the tool and bulkhead retainer, the retainer portion may be positioned at the same distance away from holes used to secure the tool and bulkhead retainer to the wall of the FSD.

The method may comprise inserting parts for forming the bulkhead through a second opening in the wall and into the internal channel of the FSD and assembling the parts within the internal channel to form the bulkhead. The bulkhead may comprise any of the features of the bulkhead according to the third aspect of the invention.

According to a fifth aspect, the present invention provides an assembly comprising an FSD, a bulkhead, and a bulkhead retainer. The bulkhead is positioned in the internal channel of the FSD to block the flow of fluid along the internal channel. The bulkhead comprises a gasket sealing a gap between a body of the bulkhead and the internal surfaces of the walls defining the internal channel. The FSD comprises a wall formed with an opening. The bulkhead retainer comprises a first plate joined with a second plate, the second plate extending perpendicularly from the first plate. The first plate is secured to an outer surface of the wall of the FSD such that the second plate extends through the opening and into a plate receiving portion formed in the body of the bulkhead. The bulkhead retainer is thereby configured to prevent the bulkhead moving along an axis of the channel by the second plate abutting with walls of the bulkhead that define plate receiving portion, said walls being positioned on opposing sides of the second plate along the axis of the channel.

The assemblies of the first and fifth aspects of the invention may form part of a wing. For example, the FSD may be attached to a wing skin. The wing may form part of an aircraft. Accordingly, further aspects of the invention include a wing comprising an assembly according to the first or fifth aspects of the invention and an aircraft comprising said wing.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
FIG. 1 shows an assembly according to a first embodiment of the invention, the assembly comprising an FSD (which is shown as partially cut-away), a bulkhead positioned within the FSD, and a connector connected to the FSD with a bulkhead retainer of the connector arranged to prevent movement of the bulkhead along the FSD;
FIG. 2 shows the connector of the assembly shown in FIG. 1 in isolation;
FIG. 3 is an exploded view of the assembly according to the first embodiment of the invention;
FIG. 4 shows the bulkhead of the assembly shown in FIG. 1 from a first side of the bulkhead;
FIG. 5 is an exploded view of the bulkhead of FIG. 4 from a second side of the bulkhead;
FIG. 6 shows a first stage during the process of using a tool to install the bulkhead within the FSD;
FIG. 7 shows a second stage during the process of using the tool to install the bulkhead within the FSD; and
FIG. 8 shows a bulkhead retainer according to an embodiment of the invention ready to be installed on an FSD.

### DETAILED DESCRIPTION

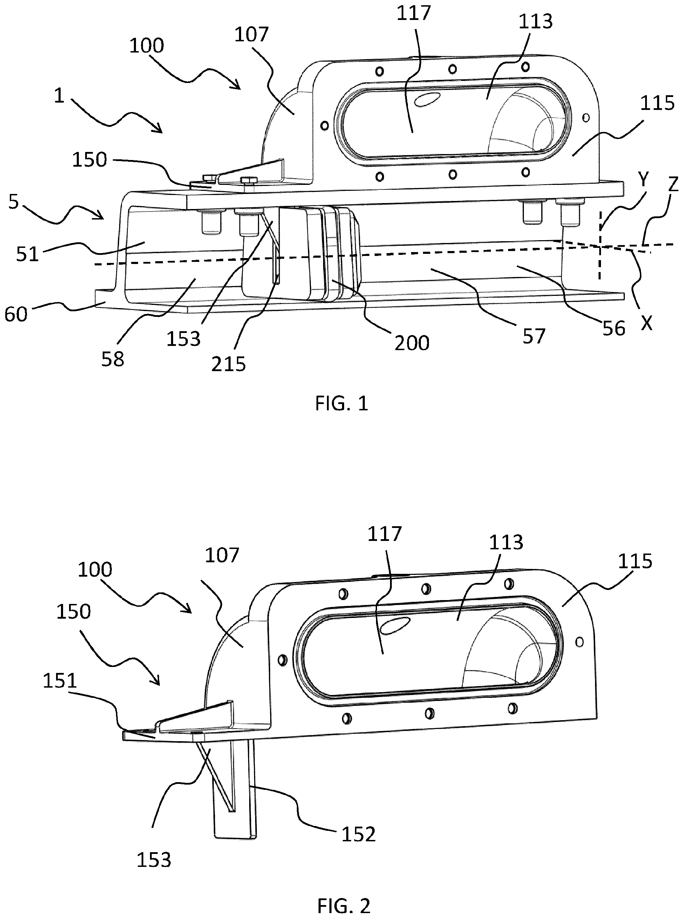

An assembly 1 according to an embodiment of the present invention is shown in FIG. 1. The assembly comprises a connector 100 connected to a hat section FSD 5 of a composite aircraft structure and a bulkhead 200 retained in position within the channel 56 of the FSD 5 by a bulkhead retainer 150 forming part of the connector 100. The channel 56 has a fluid-carrying portion 57 on the side of bulkhead 200 that is in fluid communication with the connector 100 and a non-fluid-carrying portion 58 on the other side of the bulkhead 200. The channel 56 also defines a longitudinal axis Z that runs along the length of the channel. In FIG. 1, the FSD 5 is shown as fixed to a wing skin 60. However, in other embodiments of the invention, the FSD 5 may be fixed to another part of the wing.

The connector 100 comprises a body 107 having a first opening 109 on a first face 111 of the body 107, a second opening 113 on a second face 115, and an internal channel 117 that runs through the body 107 so that fluid can flow through the connector 100, between the FSD 5 and the fluid flow duct (note that the first opening 109 is on the bottom of the connector 100 as shown in FIG. 1 to FIG. 3). The connector 100 of the presently described embodiment of the invention is an "elbow" connector, with the first opening 109 at the first face 111 lying in a plane oriented at approximately 90 degrees to the second opening 113 on the second face 115. However, it will be appreciated that the bulkhead retainer could be provided as part of other suitable FSD connectors.

As can be best seen in FIG. 2, the connector 100 comprises an integral bulkhead retainer 150. The integral bulkhead retainer 150 comprises a cover portion 151 formed by a first plate that extends from the body 107, parallel with the first face 111 of the body 107. A second plate forming a retainer portion 152 of the bulkhead retainer 150, extends substantially perpendicularly from the cover portion 151 in a direction away from the first face 111 of the body 107. A stiffening member in the form of a triangular stiffening web 153 extends between adjacent surfaces of the cover portion 151 and the retainer portion 152, in a plane that is perpendicular to the planes defined by the cover portion 151 and the retainer portion 152.

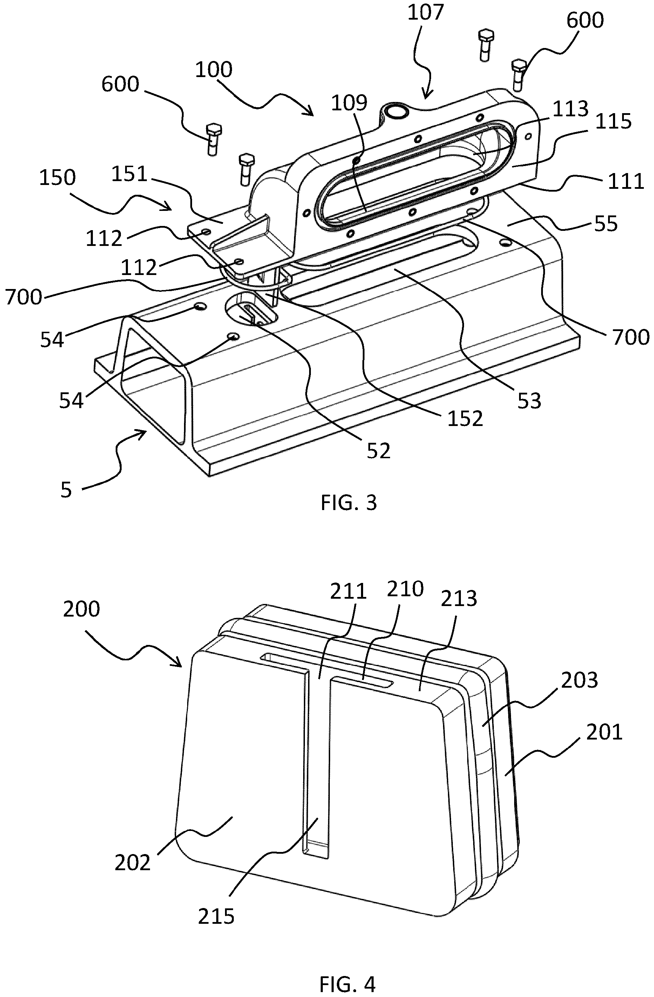

The crown 55 of the FSD 5 is provided with a first opening 52 and a second opening 53. The openings 52, 53 can be moulded in the FSD 5 during the curing process or alternatively the openings 52, 53 can be machined in the FSD 5 post-cure. As can be best seen in FIG. 3, the first opening 52 is configured to receive the retainer portion 152 of the bulkhead retainer 150, while the second opening 53 is for arranging in fluid communication with the first opening 109 of the connector 100.

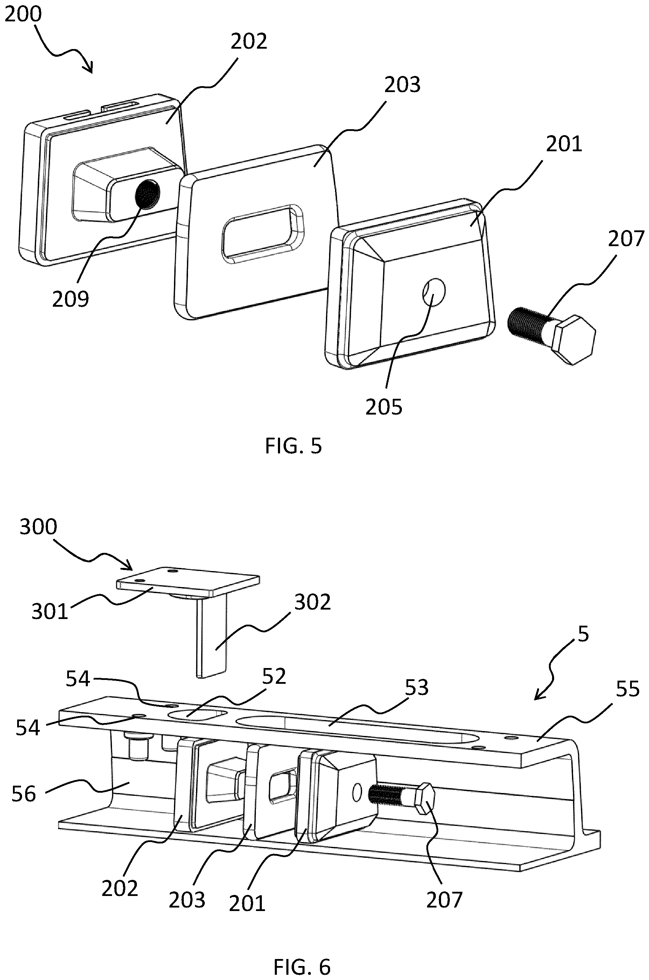

The bulkhead 200 is shown in isolation in FIG. 4 and FIG. 5. The bulkhead 200 comprises a first body portion 201, a second body portion 202, and a gasket 203 positioned between the first body portion 201 and the second body portion 202. The bulkhead 200 is dimensioned to be positioned within the channel 56 of the FSD 5, as shown in FIG. 1, such that the gasket 203 seals a gap between the first and second body portions 201, 202 and the internal surfaces 51 of the walls that define the internal channel 56 of the FSD 5. The first body portion 201 is provided with a hole 205 through which a fastener 207 passes, the fastener 207 being received in a corresponding threaded hole 209 in the second body portion 202. Tightening the fastener 207 pulls the first and second body portions 201, 202 towards one another, thereby compressing the gasket 203 and causing the gasket 203 to be deformed outwardly into engagement with the internal surfaces 51 of the walls of the channel 56 in order to form a seal against the internal surfaces 51.

The second body portion 202 of the bulkhead is formed with a pocket 210. The pocket 210 has an opening 211 on an edge 213 of the second body portion 202 that is situated adjacent the first hole 52 of the FSD 5 in use so that the retainer portion 152 of the bulkhead retainer 150 extends into the pocket 210. The pocket is formed with a slot 215 through which the stiffening web 153 of the bulkhead retainer 150 extends in use.

With the connector 100 installed upon the crown 55 of the FSD 5 as shown in FIG. 1, the cover portion 151 of the bulkhead retainer 150 covers the first opening 52, with the retainer portion 152 being located in the pocket 210 of the bulkhead 200, while the first opening 109 of the connector 100 is in fluid communication with the second opening 53. One or more gaskets 700, which are shown in FIG. 3, or other sealing members may be provided between the connector 100 and the crown 55 to provide a seal between the connector 100 and the crown 55.

Pressure differences between the fluid-carrying portion 57 of the channel 56 and the non-fluid-carrying portion 58 of the channel 56 may exert forces on the bulkhead 200 which are substantial enough to cause the bulkhead 200 to move along the channel 56 in use. In particular, the fluid-carrying portion 57 may generally be at a higher pressure than the non-fluid-carrying portion 58 in flight and the resulting pressure difference will impart a force on the bulkhead 200 which may push the bulkhead 200 along the channel 56 in a direction towards the non-fluid-carrying portion 58 (i.e. from right to left in FIG. 1). However, with the retainer portion 152 of the bulkhead retainer 150 located in the pocket 210 of the bulkhead 200 as shown in FIG. 1, movement of the bulkhead 200 along the axis Z of the channel 56 is prevented by the retainer portion 152 abutting within the internal walls of the pocket 210 positioned on opposing sides of the retainer portion 152 along the axis Z of the channel 56. Note that the stiffening web 153 is positioned to stiffen the bulkhead retainer 150 to resist motion of the bulkhead 200 in a direction towards the non-fluid-carrying portion 58 of the channel 56.

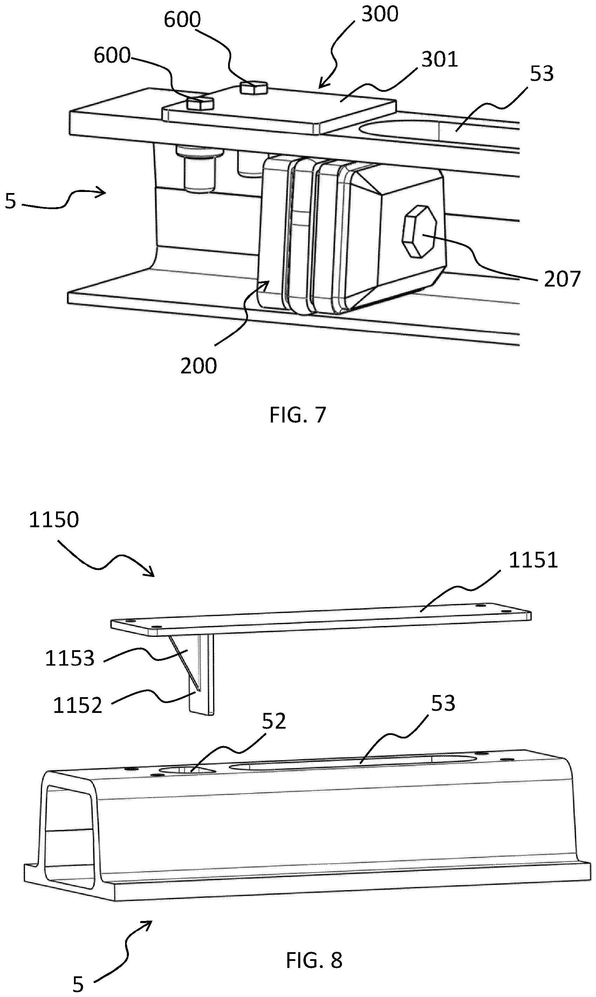

A process of installing the bulkhead 200 will now be described with reference to FIG. 6 and FIG. 7. Due to the size of the bulkhead 200, it must be inserted into the channel 56 via the second opening 53 formed in the crown 55 of the FSD. The second opening 53 being the opening configured for fluid communication with the connector 100 and thereby having dimensions large enough to receive the bulkhead 200. In embodiments of the invention, the second opening 53 may be large enough to receive the assembled bulkhead 200. However, in the presently described embodiment, the respective parts of the bulkhead 200 are inserted into the channel 56 and are assembled within the channel 56, with the fastener 207 being engaged with the second body portion 202, but not yet tightened to expand the gasket 203. The bulkhead 200 is then moved along the channel 56 to a position in which the opening 211 of the pocket 210 is situated adjacent the first opening 52 in the crown 55 of the FSD 5.

A tool 300 having a similar structure and dimensions to the bulkhead retainer 150 is then installed prior to tightening the fastener 207 of the bulkhead 200. As can be best seen in FIG. 6, the tool 300 comprises a first plate portion 301 and a second plate portion 302 that extends perpendicularly from the first plate portion 301. In use, the first plate portion 301 sits upon the crown 55 of the FSD and the second plate portion 302 extends through the first opening 52 and into the pocket 210 of the bulkhead 200. The tool 300 is fastened to the FSD 5 using fasteners 600 which pass through the first plate portion 301 and into holes 54 in the crown 55 of the FSD 5 which will be later used for fastening the connector 100 to the crown 55.

The internal dimensions of the pocket 210 of the bulkhead 200 are larger than the external dimensions of the second plate portion 302 such that the second plate portion 302 fits relatively loosely within the pocket 210 and can be positioned within the pocket 210 so that the second plate portion 302 does not make contact with the internal walls of the pocket 210 (although it is not a requirement that the second plate portion 302 does not make contact with the pocket 210 during the process of installing the bulkhead 200). In particular, the second plate portion 302 is dimensioned such that, when the second plate portion 302 is located centrally in the pocket 201, there will be approximately 0.5 millimetres of clearance along the longitudinal axis Z of the channel 56 between the second plate portion 302 and the internal walls of the pocket 210 on either side of the second plate portion 302. Additionally, there will be approximately 4 millimetres of clearance between the second plate portion 302 and the internal walls of the pocket on each lateral side edge of the second plate portion 302, along a transverse axis X of the channel 56, which is perpendicular to the longitudinal axis Z, and oriented horizontally in FIG. 1. There will also be at least 4 millimetres of clearance between the lower edge of the second plate portion 302 and the internal wall of the pocket 210 adjacent the lower edge of the second plate portion 302 along the height direction Y of the channel 56, the height direction Y of the channel 56 being perpendicular to both the X and Z directions and oriented vertically in FIG. 1. In other embodiments of the invention the relative dimensions of the second plate portion and the pocket may of course be different and therefore different clearances may be provided between the second plate portion and the internal walls of the pocket.

The fastener 207 of the bulkhead 200, which can be accessed via the second opening 52 of the FSD 5, is then tightened to pull the first and second body portions 201, 202 closer to one another, thereby compressing the gasket 203 and causing the gasket 203 to be deformed outwardly into engagement with the internal surfaces 51 of the walls of the channel 56 of the FSD 5 in order to form a seal. Because the internal dimensions of the pocket 210 are larger than the external dimensions of the second plate portion 301, the bulkhead 200 is able to move with respect to the tool 300 as the fastener 207 is tightened, thereby allowing the bulkhead 200 to self-align within the channel 56 as the gasket 203 expands to form a seal with the internal surfaces 51 of the channel 56.

Once the bulkhead 200 is installed and sealed within the channel of the FSD 5, the tool 300 is removed and the connector 100 is fitted to the crown 55 of the FSD by moving the connector 100 from the position shown in FIG. 3 to the position shown in FIG. 1. It should be noted that the dimensions of the tool 300 are such that the opening 211 of the pocket 210 of the installed bulkhead 200 will be positioned such that, as the connector 100 is moved into position upon the crown 55 of the FSD 5, the retainer portion 152 of the bulkhead retainer 150 will be received into the pocket 210 without the retainer portion 152 abutting with the internal walls of the pocket 210 in a way that causes substantial movement of the bulkhead 200.

The external dimensions of the retainer portion 152 of the bulkhead retainer 150 are substantially the same as the second plate portion 302 of the tool 300. As such, the retainer portion 152 is dimensioned such that, when the retainer portion 152 is located centrally in the pocket 201, there will be approximately 0.5 millimetres of clearance along the longitudinal axis Z of the channel 56 between the retainer portion 152 and the internal walls of the pocket 210 on either side of the retainer portion 152. Additionally, there will be approximately 4 millimetres of clearance between the retainer portion 152 and the internal walls of the pocket on each lateral side edge of the retainer portion 152, along the transverse axis X of the channel 56. There will also be approximately 4 millimetres of clearance along the height direction Y of the channel 56 between the lower edge of the retainer portion 152 and the internal wall of the pocket 210 adjacent the lower edge of the retainer portion 152. In other embodiments of the invention the relative dimensions of the retainer portion and the pocket may of course be different and therefore different clearances may be provided between the retainer portion and the internal walls of the pocket.

Because the external dimensions of the retainer portion 152 of the bulkhead retainer 150 are substantially the same as the second plate portion 302 of the tool 300, the retainer portion 152 of the bulkhead retainer 150 is moved into the pocket 210 of the bulkhead 200 without the retainer portion 152 abutting with the bulkhead 200 in a way that causes substantial movement of the bulkhead 200, and the bulkhead 200 is thereby left in its self-aligned configuration within the channel 56. In other embodiments of the invention the relative dimensions of the retaining portion of the bulkhead retainer and the second plate portion of the tool may of course be different. For example, the retaining portion may have one or more dimensions that are smaller than the second plate portion.

Once in position upon the crown 55 of the FSD 5, the connector 100 is fastened to the crown 55 using fasteners 600 which pass through holes 112 in the connector 100 and which are secured in corresponding holes 54 in the crown 55 of the FSD. It should be noted that an advantage of this arrangement over a separate connector and bulkhead retainer is that, in the present arrangement, both the connector and bulkhead retainer can be fastened to the crown 55 of the FSD 5 using four fasteners 600, which are shown in FIG. 3, and that two of these fasteners are located in the non-fluid-carrying portion 58 of the channel 56. Typically, securing a connector without an integrated bulkhead retainer to an FSD as shown in FIG. 1 would require four fasteners to be situated within the fluid-carrying portion 57 of the channel 56. A connector 100 of the type described herein with an integrated bulkhead retainer 150 therefore advantageously reduces the number of fasteners situated within the fluid-carrying portion of the channel 56, thereby reducing the drag within the channel 56.

The bulkhead retainer 150 described above forms part of a connector 100 for connecting the FSD 5 with another fluid flow duct. This embodiment of the invention is particularly advantageous because a relatively large opening in the FSD 5 is needed for inserting the bulkhead 200 into the FSD 5, and the opening 53 to which the connector 100 is fluidly connected provides a suitably sized opening. Therefore, placing a bulkhead adjacent to a connector is particularly convenient. However, in embodiments of the invention, the bulkhead retainer may not form part of a connector. For example, FIG. 8 shows a bulkhead retainer 1150 that is configured to fit the same FSD 5 as described above with respect to FIGS. 1 to 6 but which does not form part of a connector 100. The bulkhead retainer 1150 comprises a cover portion 1151 formed by an elongate first plate. A second plate forming a retainer portion 1152 of the bulkhead retainer 150, extends substantially perpendicularly from the cover portion 1151. A stiffening member in the form of a triangular stiffening web 1153 extends between adjacent surfaces of the cover portion 1151 and the retainer portion 1152, in a plane that is perpendicular to the planes defined by the cover portion 1151 and the retainer portion 1152.

Similar to the bulkhead retainer 150 described above, the bulkhead retainer 1150 is configured such that the retainer portion 1152 is received in the first opening 52 of the FSD 5 and into the pocket 210 of the bulkhead 200, while the cover portion 1151 covers the first opening 52. However, because there is no connector present in this case, the cover portion 1151 extends to also cover the first opening 53. It should be noted that the tool 300 may also be used in this case to install the bulkhead prior to installing the bulkhead retainer 1150.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An assembly comprising a fuel stringer duct, a bulkhead, and a bulkhead retainer, wherein:
the bulkhead is positioned in the internal channel of the fuel stringer duct to block the flow of fluid along the internal channel, the bulkhead comprising a gasket sealing a gap between a body of the bulkhead and the internal surfaces of the walls defining the internal channel of the fuel stringer duct;
the fuel stringer duct comprises a wall formed with a first opening,
the bulkhead retainer comprises a cover portion and a retainer portion,
the cover portion is fastened to an outer surface of the wall of the fuel stringer duct such that the cover portion covers the first opening in the wall,
the retainer portion extends from the cover portion, through the first opening in the wall, and into the internal channel of the fuel stringer duct; and
the retainer portion is configured to abut with the body of the bulkhead to prevent movement of the bulkhead along the internal channel of the fuel stringer duct beyond the retainer portion.

2. An assembly according to claim 1, wherein the body of the bulkhead is formed with a pocket and the retainer portion of the bulkhead retainer is received in the pocket.

3. An assembly according to claim 2, wherein the retainer portion is a plate oriented in a plane that is perpendicular to an axis defined by the channel.

4. An assembly according to claim 3, wherein the bulkhead retainer comprises a stiffening member extending between the cover portion and the retainer portion.

5. An assembly according to any preceding claim, wherein the internal dimensions of the pocket are larger than the external dimensions of the retainer portion.

6. An assembly according to any preceding claim, wherein there is a second opening through the thickness of the wall of the fuel stringer duct and the second opening is dimensioned such that the bulkhead can be passed through the second opening and into the internal channel of the fuel stringer duct.

7. An assembly according to claim 6, wherein the gasket of the bulkhead is at a position along the fuel stringer duct between the first opening and the second opening.

8. An assembly according to claim 6 or 7, wherein the bulkhead retainer forms part of a connector for connecting a fluid flow duct to a fuel stringer duct; the connector comprises a first opening on a first face, a second opening on a second face, and an internal channel for fluid passage between the first opening and the second opening; the connector is mounted to the outer surface of the wall of the fuel stringer duct such that the first opening of the connector is in fluid communication with the second opening of the fuel stringer duct.

9. An assembly according to claim 8, wherein the connector is mounted to the fuel stringer duct using one or more fasteners on a first side of the retainer portion and one or more fasteners on a second, opposite side of the retainer portion.

10. A connector suitable for use as the connector of claim 8 or claim 9, wherein the connector comprises a body, the body comprises a first opening on a first face, a second opening on a second face, and an internal channel for fluid passage between the first opening and the second opening, and wherein the connector comprises a bulkhead retainer comprising a cover portion having a face that is co-planar with the first face of the body and a retainer portion that extends from the cover portion.

11. A bulkhead for a fuel stringer duct comprising a first body portion, a second body portion, and a gasket positioned between the first body portion, wherein the bulkhead is configured such that the first body portion and second body portion can be moved towards one another to compress the gasket and to thereby cause the gasket to move outwardly with respect to the first and second body portions; and one of the first and second body portions comprises a pocket for receiving a bulkhead retainer.

12. A bulkhead according to claim 11, wherein the bulkhead comprises a fastener, the first body portion is provided with a hole through which a fastener passes, the fastener being received in a corresponding threaded hole in the second body portion; the fastener is operable to move the first body portion and second body towards one another to compress the gasket, and the second body portion comprises the pocket.

13. A method of installing a bulkhead in a fuel stringer duct, the method comprising:
inserting a retainer portion of a tool through a first opening in a wall of a fuel stringer duct and into a pocket formed in a bulkhead;
securing the tool to the wall of the fuel stringer duct such that the tool is held in a fixed position with respect to the fuel stringer duct;
adjusting a gasket of the bulkhead to seal a gap between a body of the bulkhead and the internal surfaces of the walls defining the internal channel of the fuel stringer duct;
removing the tool; and
installing a bulkhead retainer by inserting a retainer portion of the bulkhead retainer into the pocket of the bulkhead and securing a cover portion of the bulkhead retainer to the wall of the fuel stinger duct such that the cover portion covers the first opening in the wall.

14. The method of claim 13 comprising inserting parts for forming the bulkhead through a second opening in the wall and into the internal channel of the fuel stringer duct and assembling the parts within the internal channel to form the bulkhead.

15. An assembly comprising a fuel stringer duct, a bulkhead, and a bulkhead retainer, wherein:
the bulkhead is positioned in the internal channel of the fuel stringer duct to block the flow of fluid along the internal channel, the bulkhead comprising a gasket sealing a gap between a body of the bulkhead and the internal surfaces of the walls defining the internal channel;
the fuel stringer duct comprises a wall formed with an opening;
the bulkhead retainer comprises a first plate joined with a second plate, the second plate extending perpendicularly from the first plate; and
the first plate is secured to an outer surface of the wall of the fuel stringer duct such that the second plate extends through the opening and into a plate receiving portion formed in the body of the bulkhead, the bulkhead retainer thereby being configured to prevent the bulkhead moving along an axis of the channel by the second plate abutting with walls of the bulkhead that define plate receiving portion, said walls being positioned on opposing sides of the second plate along the axis of the channel.
